# EUROPÄISCHE PATENTSCHRIFT

(11) **EP 2 179 484 B1**
(45) Veröffentlichungstag und Bekanntmachung des Hinweises auf die Patenterteilung: **11.09.2013**
(21) Anmeldenummer: 08747902.8
(22) Anmeldetag: 26.05.2008
(51) Int. Cl.: H02J 7/00

(54) **VERFAHREN UND VORRICHTUNG ZUM LADEN EINES ENERGIESPEICHERS**
METHOD AND APPARATUS FOR CHARGING AN ENERGY STORE
PROCÉDÉ ET DISPOSITIF PERMETTANT DE CHARGER UN ACCUMULATEUR D'ÉNERGIE

(30) Priorität: 29.06.2007 AT 10102007
(43) Veröffentlichungstag der Anmeldung: 28.04.2010
(73) Patentinhaber: Fronius International GmbH, 4643 Pettenbach (AT)
(72) Erfinder: ARTELSMAIR, Bernhard, A-4643 Pettenbach (AT); FINK, Reinhold, A-3340 Waidhofen/Ybbs (AT); HORNER, Gerhard, A-4020 Linz (AT)
(74) Vertreter: Sonn & Partner Patentanwälte
(86) Internationale Anmeldenummer: PCT/AT2008/000180
(87) Internationale Veröffentlichungsnummer: WO 2009/003202

(56) Entgegenhaltungen:
- US-A- 5 720 608
- US-A1- 2006 016 446
- US-A1- 2006 028 165
- US-A1- 2007 126 236

## Beschreibung

Die Erfindung betrifft ein Verfahren zum Laden eines Energiespeichers über eine Stromerzeugungsvorrichtung und ein Ladegerät, wobei ein Brenner der Stromerzeugungsvorrichtung von einem Treibstoff eines Tanks versorgt wird und bei aktiviertem Brenner durch Verbrennung des Treibstoffs, welche von einer Steuervorrichtung geregelt wird, der Brenner erhitzt wird, und mit einem an einer Seite mit der Stromerzeugungsvorrichtung verbundenen Thermoelement durch einen Temperaturunterschied der Strom erzeugt wird, mit welchem der Energiespeicher geladen wird, wobei die Temperatur eines wärmeableitenden Elements überwacht wird.

Ebenso betrifft die Erfindung eine Vorrichtung zum Laden eines Energiespeichers über eine Stromerzeugungsvorrichtung, mit zumindest einer Steuervorrichtung, einem Brenner, welcher mit einem Tank zur Versorgung mit Treibstoff verbunden ist, einem mit dem Energiespeicher verbundenen Ladegerät, einem Thermoelement, dessen eine Seite mit der Stromerzeugungsvorrichtung verbunden ist, und einer Überwachungsvorrichtung für die Temperatur eines wärmeableitenden Elements.

Aus dem Stand der Technik sind Ladegeräte zum Laden von Batterien bekannt, welche hauptsächlich aus dem öffentlichen Stromnetz und teilweise durch die Sonne mit Energie versorgt werden. Somit können die Ladegeräte, welche meist eine durch einen Mikrocontroller gebildete Steuervorrichtung aufweisen, den Strom für die entsprechenden Ladeverfahren für einen Energiespeicher, wie eine Batterie, bereitstellen. Dadurch wird insbesondere die Lebensdauer der Batterie erhöht.

Sonnenenergie wird insbesondere dann als Energieversorgung eingesetzt, wenn kein öffentliches Versorgungsnetz zur Verfügung steht. Allerdings ist hierzu Tageslicht und eine ausreichende Fläche an Kollektoren erforderlich. Somit weisen Ladegeräte mit einer derartigen Stromversorgung eine entsprechende Baugröße auf, welche eine tragbare Bauform meist nicht zulassen.

Ein Verfahren zum Laden eines Energiespeichers der gegenständlichen Art ist beispielsweise aus der US 5,720,608 A bekannt. Dieses Verfahren ist nicht für die Ladung eines Energiespeichers eines Kraftfahrzeuges geeignet.

Die US 7,180,264 B2 löst dieses Problem für tragbare Ladegeräte derart, dass der Ladestrom für die Batterien mit einer Vorrichtung erzeugt wird, welche aus einem Tank mit Treibstoff, einem Brenner, einem Thermoelement und einer Steuervorrichtung besteht. Das Thermoelement erzeugt aufgrund seiner physikalischen Eigenschaften eine elektrische Spannung bzw. elektrische Energie, wenn das Thermoelement an einen Verbraucher angeschlossen wird und somit ein elektrischer Strom fließt. Voraussetzung für das Auftreten der thermoelektrischen Spannung ist ein gewisser Temperaturunterschied zwischen einer Seite und der dieser gegenüberliegenden Seite des Thermoelements. Zu diesem Zweck wird eine Seite des Thermoelements mit Hilfe des Brenners, welcher den Treibstoff aus dem Tank verbrennt, erhitzt, wohingegen die andere Seite des Thermoelements Umgebungstemperatur aufweist, so dass der für die thermoelektrische Spannung notwendige Temperaturunterschied gewährleistet ist. Mit dieser Methode können insbesondere Lithium-Ionen- und Lithium-Polymer-Batterien mit einer maximalen Kapazität von 0,5 Amperestunden (Ah) geladen werden.

Nachteilig dabei ist der relativ niedrige Wirkungsgrad derartiger Thermoelemente. Dieser ist dadurch gegeben, dass die Wärme, welche vom Brenner an das Thermoelement abgegeben wird, auch an die gegenüberliegende Seite des Thermoelements weitergeleitet wird und dort nicht oder nicht in ausreichendem Maße abgeführt werden kann. Dadurch, dass sich die Temperatur der Umgebung rasch an die Temperatur an der gegenüberliegenden Seite des Thermoelements, welche durch den Brenner erhitzt wird, anpasst, ist der erforderliche Temperaturunterschied für die Stromerzeugung nicht mehr gegeben, wodurch die Zeit zum Laden der Batterie begrenzt wird. Somit können Energiespeicher bzw. Batterien mit höheren Kapazitäten, welche demnach eine längere Ladezeit benötigen, nicht effektiv geladen werden. Es müsste das Laden nach kurzer Zeit wieder unterbrochen werden, bis der erforderliche Temperaturunterschied wieder hergestellt ist. Demnach kann eine Batterie bzw. ein Energiespeicher mit einer höheren Kapazität, beispielsweise von 30 Ah und darüber, wie dies bei einem Energiespeicher eines Fahrzeugs, insbesondere Kraftfahrzeugs der Fall ist, nicht schonend und effektiv geladen werden.

Die Aufgabe der vorliegenden Erfindung besteht in der Schaffung eines oben genannten Verfahrens und einer oben genannten Vorrichtung durch welche ein höherer Wirkungsgrad und eine längere Ladezeit erreicht werden kann und die Kapazität und Funktionalität eines Energiespeichers eines Fahrzeugs über einen längeren Zeitraum aufrecht erhalten werden kann.

Die Aufgabe der Erfindung wird in verfahrensmäßiger Hinsicht dadurch gelöst, dass zur Erhaltung der Kapazität des Energiespeichers eines abgestellten, unbetriebenen Fahrzeugs, insbesondere Kraftfahrzeugs, der Energiespeicher geladen wird, wobei die Temperatur eines mit der zweiten Seite des Thermoelements verbundenen wärmeableitenden Elements, an dem die Stromerzeugungsvorrichtung montiert ist, überwacht wird und der Brenner in Abhängigkeit der gemessenen Temperatur des wärmeableitendenElements geregelt wird. Vorteilhaft ist hierbei, dass eine Selbstentladung des Energiespeichers bzw. der Batterie des abgestellten Fahrzeugs kompensiert wird bzw. eine Erhaltungsladung der Batterie durchgeführt wird. Dadurch ist gewährleistet, dass das Fahrzeug auch nach längerem Stillstand von beispielsweise einigen Wochen noch gestartet werden kann. Ebenso wird dadurch die erforderliche Ladung der Batterie stets aufrecht erhalten, um insbesondere kontinuierliche Verbraucher, wie eine Alarmanlage, Funk-Zentralverriegelung, usw. mit ausreichender elektrischer Energie versorgen zu können. Durch das wärmeableitende Element kann unter der Voraussetzung einer konstanten Temperatur des Brenners, der mit einem Ende des Thermoelements verbunden ist, der für eine Spannungserzeugung erforderliche Temperaturunterschied des Thermoelements aufrecht erhalten und in der Folge eine konstante Ladung des Energiespeichers erzielt werden. Als wärmeableitendes Element eignet sich bei Fahrzeugen, insbesondere Kraftfahrzeugen, der Motorblock oder Rahmenteile besonders. Insbesondere im Falle der Bildung des wärmeableitenden Elements durch den Motorblock des Fahrzeugs wird bei Inbetriebnahme des Fahrzeugs die Temperatur des wärmeableitenden Elements erhöht und nach dem Abstellen des Fahrzeugs gesenkt, wodurch in vorteilhafter Weise automatisch erkannt werden kann, ob das Fahrzeug in Betrieb genommen oder abgestellt wurde. Nach dem Abstellen des Motors des Fahrzeugs wird durch entsprechendes Abkühlen des Motorblocks bzw. wärmeableitenden Elements der erforderliche Temperaturunterschied des Thermoelements für das Ladeverfahren erreicht.

Vorteilhafter Weise wird der Brenner dann aktiviert, wenn die gemessene Temperatur des wärmeableitenden Elements unter einen bestimmten Schwellwert sinkt.

Wenn der Zustand des Energiespeichers, insbesondere die Spannung des Energiespeichers, überwacht wird, kann die Ladung des Energiespeichers in Abhängigkeit dessen Ladezustands erfolgen.

Darüber hinaus kann in Abhängigkeit des Ladezustands des Energiespeichers ein entsprechendes Ladeverfahren für den Energiespeicher gewählt werden. Dadurch kann ein entsprechend dem Ladezustand geeignetes Ladeverfahren (Erhaltungsladung, Schnellladung usw.) aus bestimmten vorgegebenen und entsprechend gespeicherten Verfahren gewählt werden. Dadurch kann eine schonende Ladung und Aufrechterhaltung der Kapazität des Energiespeichers erzielt werden.

Vorteilhafter Weise wird bei Unterschreiten der Ladung des Energiespeichers bzw. dessen Spannung unter einen Schwellwert der Brenner aktiviert und der Energiespeicher geladen. Dadurch kann die Einschaltdauer verkürzt werden und die Lebensdauer der Komponenten, wie beispielsweise des Thermoelements, verlängert werden.

Vorteilhafter Weise wird bei der Aktivierung des Brenners dieser mit Treibstoff aus dem Tank des mit einem Verbrennungsmotor ausgestatteten Fahrzeugs versorgt und gezündet, wobei der Treibstoff verbrannt wird. Somit wird der Brenner mit dem selben Treibstoff wie der Motor des Fahrzeugs versorgt.

Von Vorteil ist auch, dass die Temperatur des Brenners an das Thermoelement angepasst wird, wodurch die Temperatur flexibel an den Typ und die Eigenschaften des Thermoelements abstimmbar ist. Ebenso wird die Lebensdauer des Thermoelements erhöht und der optimale Wirkungsgrad des Thermoelements ausgenutzt.

Um eine konstante Aufwärmung des Thermoelements und somit einen konstanten Temperaturunterschied am Thermoelement zu erzielen, wird der Brenner während der Verbrennung vorzugsweise im Wesentlichen auf einer konstanten Temperatur gehalten. Dies kann mit entsprechenden Temperaturregelverfahren unter Zuhilfenahme von Temperatursensoren erfolgen.

Vorteilhafter Weise wird die Temperatur des Brenners überwacht, so dass, insbesondere zur Konstanthaltung der Temperatur des Brenners, bei Abweichung der Temperatur entsprechende Schritte, wie beispielsweise eine Änderung der Treibstoffzufuhr, gesetzt werden können.

Wird der Brenner deaktiviert, wenn ein Schwellwert der Temperatur des Brenners oder des Thermoelements an der mit dem Brenner verbundenen Seite überschritten wird, kann verhindert werden, dass eine maximale Temperatur des Thermoelements überschritten wird, wodurch das Thermoelement zerstört werden könnte.

Wird der Brenner deaktiviert, wenn ein Schwellwert der Ladung bzw. Spannung des Energiespeichers überschritten wird, kann eine effiziente Ladung des Energiespeichers erzielt werden. Ebenso ist es möglich, dass der Brenner deaktiviert wird, wenn der Spannungsschwellwert des Thermoelements überschritten wird, wodurch ohne zusätzlichen Aufwand, wie einer entsprechenden elektronischen Schaltung, anhand der steigenden Temperatur erkannt werden kann, dass der Motor des Fahrzeugs gestartet wurde und der Energiespeicher somit von der üblicherweise vorhandenen Lichtmaschine des Fahrzeugs geladen wird.

Wenn zwischen der Steuervorrichtung und einer elektronischen Schaltung des Fahrzeugs Daten ausgetauscht werden, kann eine Kommunikation zwischen der Ladevorrichtung und vorhandenen elektronischen Komponenten des Fahrzeugs aufgebaut werden. Beispielsweise kann so der Füllstand des Tanks abgefragt werden. Ebenso kann die elektronische Schaltung des Fahrzeugs gegebenenfalls in die Steuervorrichtung der Ladevorrichtung eingreifen.

Die Aufgabe der Erfindung wird auch durch eine oben genannte Ladevorrichtung gelöst, bei der die zweite Seite des Thermoelements mit einem wärmeableitenden Element eines Fahrzeugs verbunden ist, und eine mit der Steuervorrichtung verbundene Überwachungsvorrichtung für die Temperatur des wärmeableitenden Elements vorgesehen ist, so dass die Stromerzeugungsvorrichtung zum Laden des Energiespeichers in Abhängigkeit der Temperatur des wärmeableitenden Elements regelbar ist. Die sich daraus ergebenden Vorteile können aus der obigen Beschreibung entnommen werden.

Wenn zumindest ein Sensor zur Erfassung der Temperatur des wärmeableitenden Elements vorgesehen ist und mit der Überwachungsvorrichtung verbunden ist, kann die Temperatur des wärmeableitenden Elements entsprechend überwacht und infolge dessen eine entsprechende Regelung des Brenners vorgenommen werden.

Dabei ist der zumindest eine Sensor vorzugsweise in einem Gehäuse der Vorrichtung integriert, welches am wärmeableitenden Element befestigt ist. Auf diese Weise muss der zumindest eine Sensor nicht extra am wärmeableitenden Element befestigt werden, sondern kann gemeinsam mit dem Gehäuse der Vorrichtung am wärmeableitenden Element befestigt werden. Dadurch ist auch ein einfaches Nachrüsten eines Fahrzeugs mit der gegenständlichen Ladevorrichtung möglich.

Wenn zumindest ein Sensor zur Erfassung der Temperatur des Brenners vorgesehen ist und mit der Überwachungsvorrichtung verbunden ist, kann das Thermoelement so betrieben werden, dass ein optimaler Wirkungsgrad erreicht wird.

Wie bereits oben erwähnt, wird das wärmeableitende Element vorzugsweise durch einen Motorblock oder Rahmenteil des Fahrzeugs gebildet. Diese Fahrzeugelemente wirken als Kühlkörper und gewährleisten über einen längeren Zeitraum eine konstante Temperatur bzw. einen konstanten Temperaturunterschied des Thermoelements.

Vorteilhafter Weise ist eine Vorrichtung zur Erfassung des Ladezustands des Energiespeichers, insbesondere zur Erfassung der Spannung des Energiespeichers, vorgesehen und mit der Überwachungsvorrichtung verbunden. Auf diese Weise kann der Brenner gezielt aktiviert werden, wenn eine Ladung des Energiespeichers erforderlich ist.

Vorteilhafter Weise ist die Überwachungsvorrichtung in der Steuervorrichtung der Ladevorrichtung integriert.

Zum Aufbau einer Kommunikation zwischen Steuervorrichtung der Ladevorrichtung und einer elektronischen Schaltung des Fahrzeugs kann die Steuervorrichtung mit der elektronischen Steuerung des Fahrzeugs, insbesondere über einen Datenbus, verbindbar sein.

Die vorliegende Erfindung und deren Vorteile wird anhand der beigefügten, schematischen Zeichnungen, welche ein Ausführungsbeispiel zeigen, näher erläutert. Darin zeigen:
Fig. 1 den funktionellen Aufbau der erfindungsgemäßen Vorrichtung;
Fig. 2 ein Blockschaltbild der Komponenten einer Ladevorrichtung;
Fig. 3 den zeitlichen Verlauf der Temperatur eines Motors eines Fahrzeugs nach dem Abstellen;
Fig. 4 den zeitlichen Verlauf der Spannung eines Energiespeichers des Fahrzeugs nach dem Abstellen des Motors; und
Fig. 5 den zeitlichen Verlauf der Temperatur auf beiden Seiten eines Thermoelementes.

Einführend wird festgehalten, dass gleiche Teile des Ausführungsbeispiels mit gleichen Bezugszeichen versehen werden.

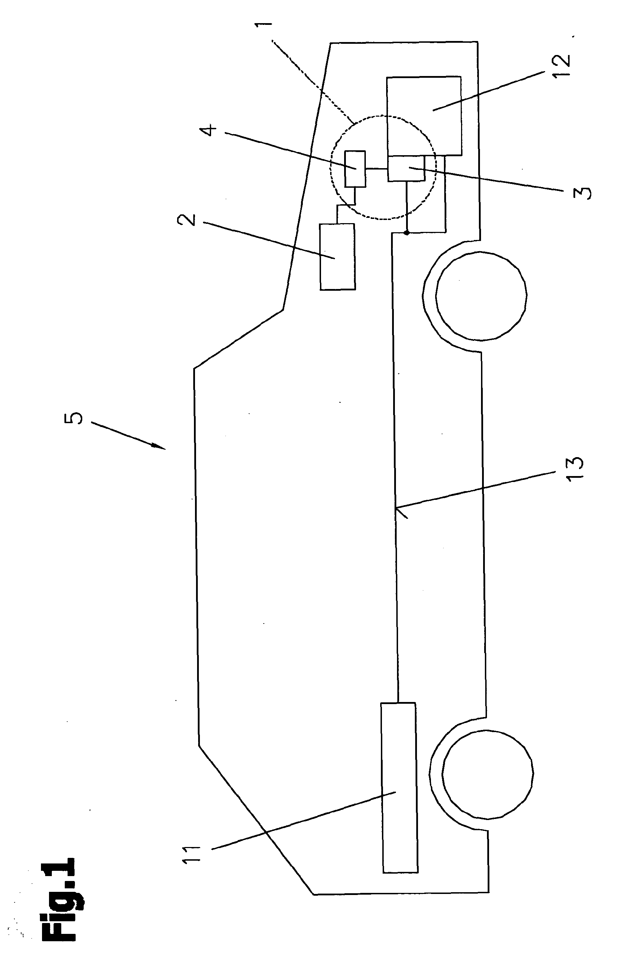

In der Zusammenschau der Fig. 1 bis 5 ist der funktionelle Aufbau der erfindungsgemäßen Vorrichtung 1 sowie das erfindungsgemäße Verfahren zum Laden des Energiespeichers 2 verdeutlicht.

In Fig. 1 ist der funktionelle Aufbau der Vorrichtung 1 zum Laden eines Energiespeichers 2 dargestellt, wobei die Vorrichtung 1 durch eine Stromerzeugungsvorrichtung 3 und einem Ladegerät 4 gebildet wird. Die Stromerzeugungsvorrichtung 3 und das Ladegerät 4 sind bevorzugt in einem Gehäuse (nicht dargestellt) angeordnet, welches am Motorblock 12 eines Fahrzeugs 5 montiert ist. Dadurch kann der Energiespeicher 2 eines abgestellten, nicht in Betrieb befindlichen Fahrzeugs 5 zur Erhaltung der Kapazität des Energiespeichers 2 geladen werden. Die ursprüngliche Kapazität des Energiespeichers 2 kann lange aufrecht erhalten werden, da einer Selbstentladung des Energiespeichers 2 sowie einer Entnahme der gespeicherten Energie durch Verbraucher entgegengewirkt werden kann. Ebenso wird insbesondere durch eine schonende Ladung die Funktionalität des Energiespeichers 2 aufrecht erhalten, so dass beispielsweise die Eigenschaften einer als Energiespeicher 2 eingesetzten Starterbatterie des Fahrzeugs 5 nicht beeinträchtigt werden.

Selbstverständlich können die Stromerzeugungsvorrichtung 3 und das Ladegerät 4 als getrennte Baueinheiten ausgeführt werden. Damit kann die Stromerzeugungsvorrichtung 3 wesentlich kleiner ausgeführt werden und eine einfache Montage am Motor, insbesondere am Motorblock 12, des Fahrzeugs 5 erreicht werden, da üblicherweise im Motorraum eines Fahrzeugs 5 relativ wenig Platz zur Verfügung ist. Das Ladegerät 4 kann hingegen dort montiert werden, wo genügend Platz zur Verfügung ist. Wesentlich ist nämlich, dass die Stromerzeugungsvorrichtung 3 an einem gut wärmeleitenden Teil des Fahrzeugs 5 montiert wird, wogegen das Ladegerät 4 keine wärmeleitenden Teile benötigt.

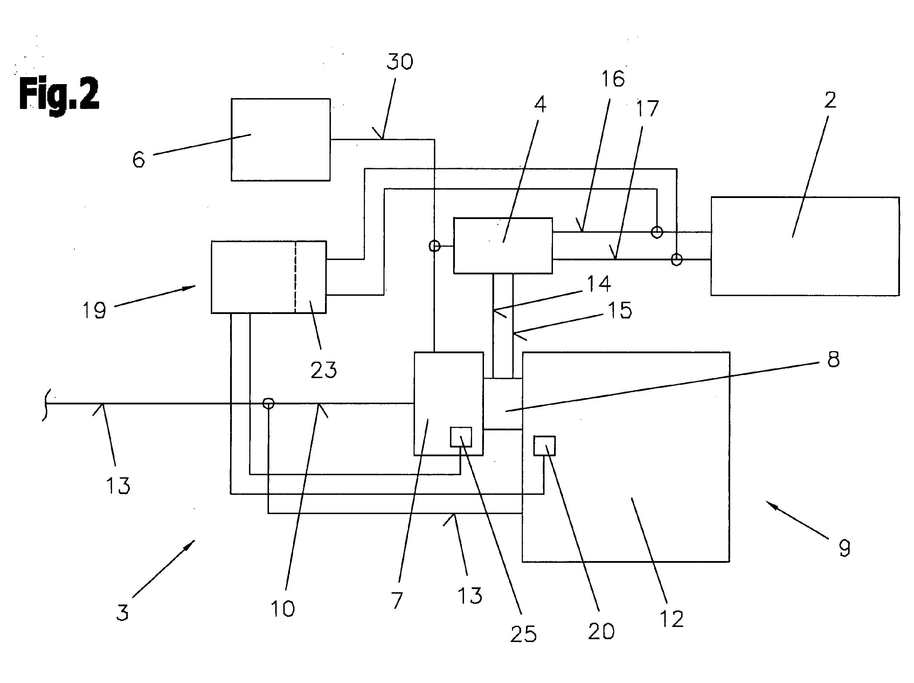

Im Detail, wie aus Fig. 2 ersichtlich, besteht die Stromerzeugungsvorrichtung 3 aus einer Steuervorrichtung 6, einem Brenner 7, einem Thermoelement 8, einem wärmeableitenden Element 9 und einer Zuleitung 10 für Treibstoff eines Tanks 11 des Fahrzeugs 5. Bevorzugt ist die Steuervorrichtung 6 durch einen Mikroprozessor gebildet. Das wärmeableitende Element 9 wird bevorzugt durch den Motor bzw. Motorblock 12 des Fahrzeugs 5 gebildet, wobei ebenso ein Rahmenteil oder Ähnliches des Fahrzeugs 5 verwendbar ist. Die Treibstoffzuleitung 10 wird im Motorraum des Fahrzeugs 5 an die Zuleitung 13 des Kraftstoffs für den Motor bzw. Motorblock 12, gegebenenfalls über einen Kraftstofffilter und eine Pumpe (nicht dargestellt), angeschlossen. Die Stromerzeugungsvorrichtung 3 kann den erforderlichen Strom, welchen das Ladegerät 4 zum Laden des Energiespeichers 2 benötigt, an das Ladegerät 4 über zwei Leitungen 14, 15 liefern. Damit nun das Ladegerät 4 den Energiespeicher 2 laden kann, ist dieses über zwei Ladeleitungen 16, 17 mit dem Energiespeicher 2 verbunden. Für eine einfache Montage sind bevorzugt entsprechende Anschlüsse an der Vorrichtung 1 vorgesehen, an welche die Treibstoffzuleitung 10 sowie die Ladeleitungen 16, 17 anschließbar sind. Des weiteren können zumindest das Ladegerät 4 und der Brenner 7 über einen Datenbus 30 mit der Steuervorrichtung 6 verbunden sein.

Im Wesentlichen wird die Leistung bzw. der Strom zum Laden des Energiespeichers 2 vom Thermoelement 8 erzeugt, wenn ein erforderlicher Temperaturunterschied 27 zwischen den beiden Seiten des Thermoelements 8 gegeben ist. Allgemein werden die beiden Seiten des Thermoelements 8 auch als sogenannte "Heiß-Seite" bzw. "Kalt-Seite" bezeichnet. Demzufolge befindet sich die "Heiß-Seite" des Thermoelements 8 am Brenner 7 und die "Kalt-Seite" des Thermoelements 8 am Motorblock 12. Da Thermoelemente 8 lediglich einen geringen Wirkungsgrad von etwa fünf bis fünfzehn Prozent aufweisen, ist das Abführen der Wärme von der "Kalt-Seite" von besonderer Bedeutung. Die auf der "Heiß-Seite" des Thermoelements 8 vom Brenner 7 produzierte Wärme (beispielsweise 50 Watt) abzüglich des Wirkungsgrades (beispielsweise fünf Prozent) muss also auf der "Kalt-Seite" des Thermoelements 8 abgeführt werden (demzufolge 47.5 Watt). Dies übernimmt erfindungsgemäß der Motorblock 12, welcher die abgeführte Wärme der "Kalt-Seite" aufnimmt und demzufolge als Kühlkörper wirkt. Somit ist stets ein konstanter Temperaturunterschied 27 am Thermoelement 8 gewährleistet, da die "Kalt-Seite" durch den Motorblock 12 im Wesentlichen auf der Umgebungstemperaturbzw. Lufttemperatur, gehalten wird. Damit dieser konstante Temperaturunterschied 27 aufrecht erhalten werden kann, ist es auch erforderlich, die Temperatur des Brenners 7 konstant zu halten. Hierzu ist es insbesondere wichtig, das Luft-Treibstoffgemisch, wie es beispielsweise für einen Verdampferbrenner 7 erforderlich ist, entsprechend zu regeln. Erfindungsgemäß erfolgt dies über die Steuervorrichtung 6 während des Betriebes des Brenners 7, wobei dieser entsprechend über den Datenbus 30 mit der Steuervorrichtung 6 verbunden ist.

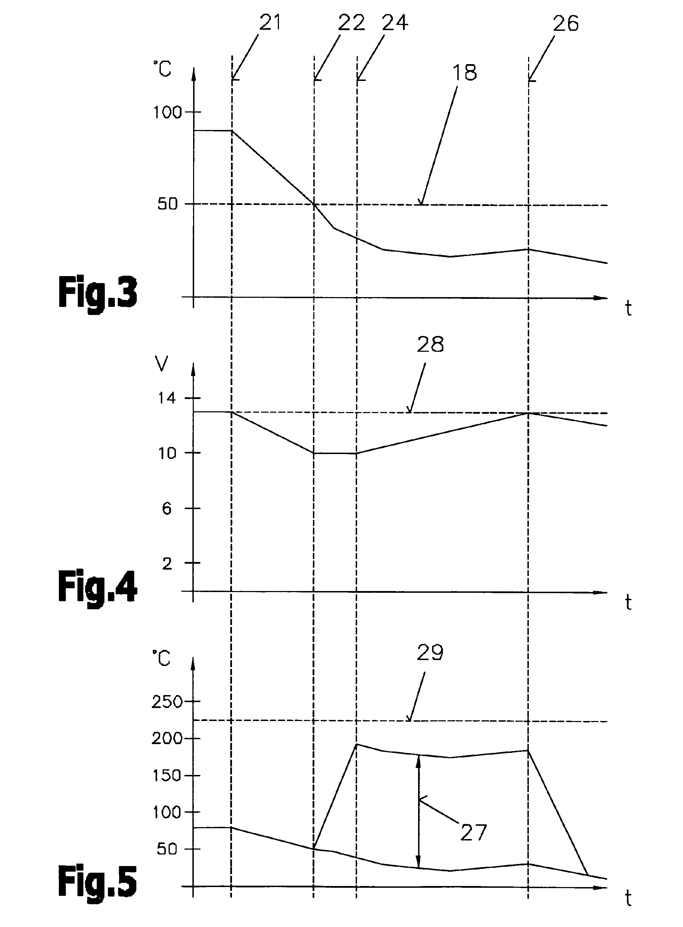

Der Zeitpunkt, wann der Brenner 7 in Betrieb genommen bzw. aktiviert wird, ist jedoch in erster Linie von der Temperatur des Motors bzw. Motorblocks 12 abhängig. Diese sollte bevorzugt unterhalb eines Schwellwertes 18, beispielsweise maximal 50°C, liegen, so dass der erforderliche Temperaturunterschied 27 für das Thermoelement 8 gegeben ist und dieses mit einem optimalen Wirkungsgrad betrieben werden kann. Demzufolge ist an der Steuervorrichtung 6 eine Überwachungsvorrichtung 19 angeschlossen, welche die Temperatur des Motorblocks 12 auswertet und überwacht. Gemessen wird die Temperatur bevorzugt durch einen Sensor 20, welcher einen entsprechenden Wert zur Auswertung an die Überwachungseinheit 19 liefert. Dazu ist der Sensor 20 bevorzugt am Motorblock 12 bzw. in unmittelbarer Nähe der Anbindstelle der "Kalt-Seite" des Thermoelements 8 am Motorblock 12 angeordnet. Dabei ist die Vorrichtung 1 bzw. dessen Gehäuse bevorzugt derart konstruiert, dass der Sensor 20 automatisch durch die Montage der Vorrichtung 1 am Motorblock 12 an diesem anliegt und die Temperatur des wärmeableitenden Elements 9, also des Motorblocks 12, entsprechend messen kann. Somit kann die Überwachungseinheit 19 ein entsprechendes Signal über den Datenbus 30 an die Steuervorrichtung 6 senden, wenn die Temperatur des Motorblocks 12 unter den Schwellwert 18 gesunken ist. Dies ist insbesondere dann der Fall, wenn der Motorblock 12 des Fahrzeugs 5 nach dem Abstellen abgekühlt ist. Beispielsweise wird das Fahrzeug 5 zum Zeitpunkt 21 abgestellt und hat die Temperatur des Motorblocks 12 zum Zeitpunkt 22 den Schwellwert 18 erreicht, wie in Fig. 3 dargestellt. Ab dem Zeitpunkt 22 wird der Brenner 7 gezündet und der Energiespeicher 2 mit dem von der Stromerzeugungsvorrichtung 3 an das Ladegerät 4 gelieferten Strom geladen. Da bevorzugt ein sogenanntes "intelligentes Ladegerät" 4 eingesetzt wird, können sämtliche Ladeverfahren, welche auf den Typ des Energiespeichers 2 abgestimmt sind, eingesetzt und an den Zustand des Energiespeichers 2 angepasst werden.

Der Ladezustand des Energiespeichers 2 kann beispielsweise durch Messen der elektrischen Größen des Energiespeichers 2, wie Spannung, Innenwiderstand, Stromaufnahme etc., beurteilt bzw. überwacht werden. Dies kann direkt vom Ladegerät 4 oder von der Überwachungseinrichtung 19 durchgeführt werden, welche die entsprechenden Werte über den Datenbus 30 an die Steuervorrichtung 6 übermitteln. Beispielsweise übernimmt diese Funktion die Überwachungseinrichtung 19, welche demnach eine Spannungsmessvorrichtung 23 aufweist. Diese ist mit dem Energiespeicher 2 entsprechend verbunden, so dass die Messung durchgeführt werden kann bzw. die Spannung von der Überwachungsvorrichtung 19 überwacht werden kann. Wie in Fig. 4 dargestellt, sinkt die Spannung des Energiespeichers 2 von dessen Maximalwert 28 in Abhängigkeit von dessen Zustand, Alter, usw., sobald das Fahrzeug 5 zum Zeitpunkt 21 abgestellt wird und der Energiespeicher 2 von einem Generator/Lichtmaschine des Fahrzeugs 5 nicht mehr geladen wird. Der Grund für dieses Absinken der Spannung ist einerseits die Selbstentladung des Energiespeichers 2 und sind andererseits Verbraucher, wie Alarmanlagen, Funk-Zentralverriegelung, usw. sowie auch die erfindungsgemäße Vorrichtung 1.Somit kennt die Steuervorrichtung 6 stets den Ladezustand des Energiespeichers 2, wodurch bei einer Aktivierung des Brenners 7 bzw. der Vorrichtung 1 das geeignete Ladeverfahren insbesondere von der Steuervorrichtung 6 oder vom Ladegerät 4 gewählt werden kann. Im einfachsten Fall sind für die entsprechenden Ladeverfahren Schwellwerte hinterlegt (nicht dargestellt), so dass beim Unterschreiten des ersten Schwellwertes eine Erhaltungsladung durchgeführt wird, beim Unterschreiten des nächsten Schwellwertes ein sogenanntes IU-Ladeverfahren, durchgeführt wird, usw..

Wenn der Brenner 7 aufgrund des Unterschreitens des Schwellwerts 18 der Motortemperatur zum Zeitpunkt 22 gezündet wird, so wird der Treibstoff im Brenner 7 verbrannt und dieser entsprechend erhitzt, beispielsweise auf etwa 200°C. Diese Temperatur wird beispielsweise zum Zeitpunkt 24 erreicht, worauf sich ein Temperaturunterschied 27 zwischen der "Heiß-Seite" und der "Kalt-Seite" von etwa 150°C einstellt und das Thermoelement 8 mit dem optimalen Wirkungsgrad betrieben wird. Ab dem Zeitpunkt 24 produziert das Thermoelement 8 also eine Spannung, welche dem Ladegerät 4 zur Verfügung steht. Somit kann das Ladegerät 4 aktiviert werden, wodurch vom Thermoelement 8 zum Ladegerät 4 ein Strom fließt, welcher vom Ladegerät 4 entsprechend zum Laden des Energiespeichers 2 angepasst wird. Damit während des Ladens der optimale Temperaturunterschied 27, welcher vom eingesetzten Typ des Thermoelements 8 abhängig ist, beibehalten wird, wird vorteilhafter Weise auch weiterhin die Temperatur des Motorblocks 12 und ebenso die Temperatur des Brenners 7 gemessen. Somit kann beispielsweise auf Veränderungen der Temperatur des Motorblocks 12, bedingt durch Sonneneinstrahlung oder dergleichen, reagiert werden. Derartige Änderungen der Temperatur sind zwischen den Zeitpunkten 24 und 26 in Fig. 5 dargestellt. Dies ist darauf zurückzuführen, dass die "Kalt-Seite" des Thermoelements 8 der Temperatur des Motorblocks 12 entspricht. Die Messung der Temperatur des Brenners 7 erfolgt bevorzugt über einen Sensor 25, welcher den gemessenen Wert an die Überwachungseinheit 19 sendet und außen am Brenner 7 bzw. an der Verbindung mit der "Heiß-Seite" des Thermoelements 8 montiert ist. Die Überwachungseinheit 19 wertet die gemessenen Daten entsprechend aus und gibt sie an die Steuervorrichtung 6 weiter, so dass die Verbrennung im Brenner 7 derart geregelt wird, dass der gewünschte Temperaturunterschied 27 am Thermoelement beibehalten werden kann. Eine derartige Regelung wird jedoch nur innerhalb gewisser Grenzen durchgeführt, da die "Heiß-Seite" des Thermoelements 8 einen gewissen Höchstwert 29 nicht überschreiten darf. Ebenso ist der Bereich, in welchem der optimale Wirkungsgrad des Thermoelements 8 erreicht wird, nur sehr schmal. Aus diesem Grund ist es besonders von Bedeutung, dass das wärmeableitende Element 9, also der Motorblock 12, viel Wärme über einen langen Zeitraum aufnehmen kann, so dass die Temperatur auf der "Kalt-Seite" möglichst konstant bleibt und die Temperatur des Brenners 7, also der "Heiß-Seite" des Thermoelements 8, nicht nachgeregelt werden muss.

Durch einen derartigen Betrieb wird also das Ladegerät 4 von der Stromerzeugungsvorrichtung 3 bzw. vom Thermoelement 8 bei Bedarf permanent mit Strom versorgt, so dass der Energiespeicher 2 geladen werden kann. Die Spannung des Energiespeichers 2 beginnt daher ab dem Zeitpunkt 24 wieder zu steigen. Werden hinterlegte Schwellwerte für die unterschiedlichen Ladeverfahren überschritten, kann das Ladeverfahren entsprechend angepasst werden, wodurch eine schonende Ladung des Energiespeichers 2 des Fahrzeugs 5 gewährleistet wird. Hat die Spannung des Energiespeichers 2 den gewünschten Maximalwert 28 erreicht, wie zum Zeitpunkt 26 ersichtlich, wird der Brenner 7 vorzugsweise wieder deaktiviert. Dadurch sinkt die Temperatur der "Heiß-Seite" des Thermoelements 8 im Wesentlichen auf die Temperatur der "Kalt-Seite", wie in Fig. 5 nach dem Zeitpunkt 26 dargestellt. Somit wird Treibstoff gespart und die bei der Verbrennung im Brenner 7 entstehenden Schadstoffe reduziert. Selbstverständlich ist es jedoch auch möglich, dass der Brenner 7 aktiv bleibt und eine Erhaltungsladung durchgeführt wird. In diesem Fall könnte der Brenner 7 dann beispielsweise nach einigen Stunden deaktiviert werden.

Des weiteren wird der Brenner 7 vorzugsweise deaktiviert, wenn von der Überwachungseinheit 19 erkannt wird, dass die Temperatur des Motorblocks 12 über den Schwellwert 18 steigt oder die Spannung des Energiespeichers 2 sprunghaft auf den Maximalwert 28, beispielsweise 13.4 Volt bei einem 12 Volt - Energiespeicher 2, steigt (nicht dargestellt). Dies ist ein Zeichen dafür, dass der Motor des Fahrzeugs 5 gestartet wurde und die Funktion der erfindungsgemäßen Vorrichtung 1 demnach nicht mehr erforderlich ist. Ebenso wird der Brenner 7 deaktiviert, wenn die Temperatur des Brenners 7 selbst, welche der Temperatur der "Heiß-Seite" des Thermoelements 8 entspricht, über einen entsprechenden Schwellwert steigt. Somit wird verhindert, dass die maximale Temperatur des Thermoelements 8 nicht überschritten wird, was eine Zerstörung des Thermoelements 8 zur Folge hätte.

Sollte die Spannung des Energiespeichers 2 nun wieder unter einen Schwellwert sinken, wird der Brenner 7 wieder aktiviert und der Energiespeicher 2 wie zuvor beschrieben geladen.

Des weiteren kann auch zur Aktivierung der Vorrichtung 1 bzw. in weiterer Folge zum Laden des Energiespeichers 2 optional ein Schwellwert für die Spannung (nicht dargestellt) des Energiespeichers 2 berücksichtigt werden. Der Brenner 7 wird also erst gezündet, wenn die Temperatur unter den Schwellwert 18 gesunken ist und die Spannung des Energiespeichers 2 entsprechend unter den Schwellwert gesunken ist. Die Überwachung dieses Schwellwertes übernimmt beispielsweise die Überwachungsvorrichtung 19. Unterschreitet nun nach einer gewissen Zeit, welche vom Zustand des Energiespeichers 2 abhängig ist, die Spannung den Schwellwert, wird die Vorrichtung 1 aktiviert und der Energiespeicher 2 mit dem geeigneten Ladeverfahren geladen. Ist der Schwellwert 28 erreicht, wird die Vorrichtung 1 wieder deaktiviert. Durch eine derartige Aktivierung der Vorrichtung 1 ergibt sich beispielsweise eine Einschaltdauer von etwa 30 Minuten bis 2 Stunden, abhängig von Zustand und Größe des Energiespeichers 2, pro Tag. Somit wird die Einschaltdauer der Vorrichtung 1 reduziert, so dass nicht unnötig Treibstoff vom Brenner 7 verbrannt wird. Ebenso wird dadurch die Lebensdauer des Thermoelements 8 sowie der anderen Komponenten verlängert.

Gegebenenfalls können auch mehrere Thermoelemente 8 seriell bzw. parallel geschaltet werden, um einen höheren Strom bzw. eine höhere Spannung bereitstellen zu können. Dies wird insbesondere für spezielle Anwendungen eingesetzt, da hierzu eine Erhöhung der Temperatur der "Heiß-Seite" erforderlich ist, um einen effizienten Wirkungsgrad zu erreichen.

Wie die soeben beschriebene Vorrichtung 1 und dessen Funktion gezeigt hat, kann die erfindungsgemäße Vorrichtung 1 vollständig selbstständig den Energiespeicher 2 des Fahrzeugs 5 laden bzw. die Kapazität von beispielsweise bis zu 300 Ah des Energiespeichers 2 aufrecht erhalten, ohne dabei eine Verbindung an eine elektronische Schaltung des Fahrzeugs 5 herstellen zu müssen. Dies ist insbesondere darauf zurückzuführen, dass die Temperatur des Motors bzw. Motorblocks 12 direkt von der Vorrichtung 1 überwacht wird. Dadurch ist es der Vorrichtung 1 möglich, die entsprechenden Komponenten zu aktivieren und den Energiespeicher 2 zu laden. Dadurch ergibt sich in vorteilhafter Weise, dass die Vorrichtung 1 in einem Fahrzeug 5 einfach nachgerüstet werden kann. Dazu muss lediglich die aus der Stromerzeugungsvorrichtung 3 und dem Ladegerät 4 bestehende Vorrichtung 1 am Motorblock 12 befestigt werden, sowie die vorgesehenen Anschlüsse der Vorrichtung 1 mit der Zuleitung 13 und dem Energiespeicher 2 verbunden werden. Es sind lediglich drei Leitungen (Ladeleitungen 16, 17 und die Kraftstoffzuleitung 10) an der Vorrichtung 1 anzuschließen, so dass der Energiespeicher 2 geladen werden kann. Eine komplizierte und aufwendige Anbindung an eine elektronische Schaltung des Fahrzeugs 5 ist dabei nicht erforderlich.

Selbstverständlich ist jedoch auch eine Variante der Vorrichtung 1 möglich, bei der eine Verbindung mit einer elektronischen Schaltung des Fahrzeugs 5 vorgesehen sein kann. Demnach kann ein Datenaustausch zwischen der Schaltung des Fahrzeugs 5 der Steuervorrichtung 6 durchgeführt werden. Dies kann insbesondere dazu verwendet werden, um den Tankfüllstand abzufragen, welche Verbraucher, wie Alarmanlage, usw. aktiviert sind, ob der Motor gestartet wird bzw. wurde, und vieles mehr. Auch kann die elektronische Schaltung des Fahrzeugs 5 gegebenenfalls die erfindungsgemäße Vorrichtung 1 steuern bzw. regeln.

Im Allgemeinen sei noch erwähnt, dass die erfindungsgemäße Vorrichtung 1 zum Laden des Energiespeichers 2 des Fahrzeugs 5 unabhängig vom erforderlichen Treibstoff ist. Es muss lediglich je nach Verhalten des Treibstoffs der Typ des Brenners 7 angepasst werden. So wird beispielsweise für die Treibstoffe Benzin, Ethanol oder Ähnliches ein Verdampfungsbrenner eingesetzt und für Treibstoffe wie Propanol, Kerosin und dergleichen ein Porenbrenner eingesetzt. Es sei jedoch angemerkt, dass der Typ des Brenners 7 für die Funktionsweise der erfindungsgemäßen Vorrichtung 1 nicht ausschlaggebend ist. Ebenso kann die erfindungsgemäße Vorrichtung 1 auch in verschiedensten Fahrzeugen 5 eingesetzt bzw. in vorteilhafter Weise auch nachgerüstet werden, da die Baugröße der Vorrichtung 1 etwa das Doppelte einer handelsüblichen Zigarettenschachtel nicht überschreitet. Demnach sollte die Anordnung der Vorrichtung 1 direkt am Motorblock 12 jedes Fahrzeugs 5 möglich sein. Unter den Begriff Fahrzeug 5 fallen unter anderem Fahrzeuge für den Straßenverkehr (Auto, LKW, Motorrad, etc.), Schienenfahrzeuge, Luftfahrzeuge, Wasserfahrzeuge, Raumfahrzeuge, Seilbahnen, Aufzüge, usw.. Die erfindungsgemäße Vorrichtung 1 kann insbesondere dort eingesetzt werden, wo ein mit Treibstoff betriebener Motor eines Fahrzeugs 5 mit einem Energiespeicher 2, welcher in den meisten Fällen zum Starten und zwischenzeitlichen Versorgung des Bordnetzes eingesetzt wird, kombiniert wird.

## Patentansprüche

1. Verfahren zum Laden eines Energiespeichers (2) über eine Stromerzeugungsvorrichtung (3) und ein Ladegerät (4), wobei ein Brenner (7) der Stromerzeugungsvorrichtung (3) von einem Treibstoff eines Tanks (11) versorgt wird und bei aktiviertem Brenner (7) durch Verbrennung des Treibstoffs, welche von einer Steuervorrichtung (6) geregelt wird, der Brenner (7) erhitzt wird, und mit einem an einer Seite mit der Stromerzeugungsvorrichtung (3) verbundenen Thermoelement (8) durch einen Temperaturunterschied der Strom erzeugt wird, mit welchem der Energiespeicher (2) geladen wird, wobei die Temperatur eines wärmeableitenden Elements (9) überwacht wird, **dadurch gekennzeichnet, dass** zur Erhaltung der Kapazität des Energiespeichers (2) eines abgestellten, unbetriebenen Fahrzeugs (5) der Energiespeicher (2) geladen wird, wobei die Temperatur eines mit der zweiten Seite des Thermoelements (8) verbundenen wärmeableitenden Elements (9), an dem die Stromerzeugungsvorrichtung (3) montiert ist, überwacht wird und der Brenner (7) in Abhängigkeit der gemessenen Temperatur des wärmeableitenden Elements (9) geregelt wird.

2. Verfahren nach Anspruch 1, **dadurch gekennzeichnet, dass** der-Brenner (7) aktiviert wird, wenn die gemessene Temperatur des wärmeableitenden Elements (9) unter einen Schwellwert (18) sinkt.

3. Verfahren nach Anspruch 1 oder 2, **dadurch gekennzeichnet, dass** der Ladezustand des Energiespeichers (2), insbesondere die Spannung des Energiespeichers (2), überwacht wird.

4. Verfahren nach Anspruch 3, **dadurch gekennzeichnet, dass** in Abhängigkeit des Ladezustandes des Energiespeichers (2) ein entsprechendes Ladeverfahren für den Energiespeicher (2) gewählt wird.

5. Verfahren nach Anspruch 3 oder 4, **dadurch gekennzeichnet, dass** bei Unterschreiten der Ladung des Energiespeichers (2) bzw. dessen Spannung unter einen Schwellwert der Brenner (7) aktiviert und der Energiespeicher (2) geladen wird.

6. Verfahren nach einem der Ansprüche 1 bis 5, **dadurch gekennzeichnet, dass** bei der Aktivierung des Brenners (7) dieser mit Treibstoff aus dem Tank (11) des mit einem Verbrennungsmotor ausgestatteten Fahrzeugs (5) versorgt und gezündet wird, wobei der Treibstoff verbrannt wird.

7. Verfahren nach Anspruch 6, **dadurch gekennzeichnet, dass** während der Verbrennung der Brenner (7) im Wesentlichen auf einer konstanten Temperatur gehalten wird.

8. Verfahren nach Anspruch 7, **dadurch gekennzeichnet, dass** die Temperatur des Brenners (7) an das Thermoelement (8) angepasst wird.

9. Verfahren nach einem der Ansprüche 1 bis 8, **dadurch gekennzeichnet, dass** die Temperatur des Brenners (7) überwacht wird.

10. Verfahren nach Anspruch 9, **dadurch gekennzeichnet, dass** der Brenner (7) deaktiviert wird, wenn ein Schwellwert der Temperatur des Brenners (7) oder des Thermoelements (8) an der mit dem Brenner (7) verbundenen Seite überschritten wird.

11. Verfahren nach einem der Ansprüche 3 bis 10, **dadurch gekennzeichnet, dass** der Brenner (7) deaktiviert wird, wenn ein Schwellwert der Ladung bzw. Spannung des Energiespeichers (2) überschritten wird.

12. Verfahren nach einem der Ansprüche 1 bis 11, **dadurch gekennzeichnet, dass** zwischen der Steuervorrichtung (6) und einer elektronischen Schaltung des Fahrzeugs (5) Daten ausgetauscht werden.

13. Vorrichtung (1) zum Laden eines Energiespeichers (2) über eine Stromerzeugungsvorrichtung (3), mit zumindest einer Steuervorrichtung (6), einem Brenner (7), welcher mit einem Tank (11) zur Versorgung mit Treibstoff verbunden ist, einem mit dem Energiespeicher (2) verbundenen Ladegerät (4), und einem Thermoelement (8), dessen eine Seite mit der Stromerzeugungsvorrichtung (3) verbunden ist, und einer Überwachungsvorrichtung für die Temperatur eines wärmeableitenden Elements (9), **dadurch gekennzeichnet, dass** die zweite Seite des Thermoelements (8) mit einem wärmeableitenden Element (9) eines Fahrzeugs (5) verbunden ist, und eine mit der Steuervorrichtung (6) verbundene Überwachungsvorrichtung (19) für die Temperatur des wärmeableitenden Elements (9) vorgesehen ist, so dass die Stromerzeugungsvorrichtung (3) zum Laden des Energiespeichers (2) in Abhängigkeit der Temperatur des wärmeableitenden Elements (9) regelbar ist.

14. Vorrichtung (1) nach Anspruch 13, **dadurch gekennzeichnet, dass** zumindest ein Sensor (20) zur Erfassung der Temperatur des wärmeableitenden Elements (9) vorgesehen und mit der Überwachungsvorrichtung (19) verbunden ist.

15. Vorrichtung (1) nach Anspruch 13 oder 14, **dadurch gekennzeichnet, dass** der zumindest eine Sensor (20) in einem Gehäuse der Vorrichtung (1) integriert ist, welches am wärmeableitenden Element (9) befestigt ist.

16. Vorrichtung (1) nach einem der Ansprüche 13 bis 15, **dadurch gekennzeichnet, dass** zumindest ein Sensor (25) zur Erfassung der Temperatur des Brenners (7) vorgesehen und mit der Überwachungsvorrichtung (19) verbunden ist.

17. Vorrichtung (1) nach einem der Ansprüche 13 bis 16, **dadurch gekennzeichnet, dass** das wärmeableitende Element (9) durch einen Motorblock (12) oder Rahmenteil des Fahrzeugs (5) gebildet ist.

18. Vorrichtung (1) nach einem der Ansprüche 13 bis 17, **dadurch gekennzeichnet, dass** eine Vorrichtung (23) zur Erfassung des Ladezustands des Energiespeichers (2), insbesondere zur Erfassung der Spannung des Energiespeichers (2) vorgesehen und mit der Überwachungsvorrichtung (19) verbunden ist.

19. Vorrichtung (1) nach einem der Ansprüche 13 bis 18, **dadurch gekennzeichnet, dass** die Überwachungsvorrichtung (19) in der Steuervorrichtung (6) integriert ist.

20. Vorrichtung (1) nach einem der Ansprüche 13 bis 19, **dadurch gekennzeichnet, dass** die Steuervorrichtung (6) mit einer elektronischen Schaltung des Fahrzeugs (5), insbesondere über einen Datenbus (30), verbindbar ist.

## Claims

1. A method for charging an energy storage (2) via a current generating device (3) and a charging device (4), wherein a burner (7) of the current generating device (3) is supplied with fuel from a tank (11), and wherein the burner (7) is heated in its activated state by combustion of the fuel, said combustion being controlled by a control device (6), and wherein the current is generated with a thermal element (8) by a temperature difference and used for charging the energy storage (2), one side of said thermal element (8) being connected to the current generating device (3), wherein the temperature of a heat dissipating element (9) is monitored, **characterized in that** the energy storage (2) is charged for maintaining the capacity of the energy storage (2) of a turned off, non used vehicle (5), wherein the temperature of a heat dissipating element (9) is monitored, which heat dissipating element (9) is connected to the second side of the thermal element (8), and to which the current generating device (3) is mounted, and wherein the burner (7) is controlled as a function of the measured temperature of the heat dissipating element (9).

2. The method according to claim 1, **characterized in that** the burner (7) will be activated in case the measured temperature of the heat dissipating element (9) has fallen short of a threshold value (18).

3. The method according to claim 1 or 2, **characterized in that** the charging condition of the energy storage (2), in particular the voltage of the energy storage (2), is monitored.

4. The method according to claim 3, **characterized in that** an appropriate charging process is selected for the energy storage (2) as a function of the charging condition of the latter.

5. The method according to claim 3 or 4, **characterized in that** the burner (7) will be activated, and the energy storage (2) will be charged, in case the charge of the energy storage (2) and/or its voltage has fallen below a threshold value.

6. The method according to any one of claims 1 to 5, **characterized in that** upon activation of the burner (7), the latter is supplied with fuel from the tank (11) of the combustion engine equipped vehicle (5), and ignited, with the fuel being combusted.

7. The method according to claim 6, **characterized in that** the burner (7) is kept at a substantially constant temperature during combustion.

8. The method according to claim 7, **characterized in that** the temperature of the burner (7) is adapted to the thermal element (8).

9. The method according to any one of claims 1 to 8, **characterized in that** the temperature of the burner (7) is monitored.

10. The method according to claim 9, **characterized in that** the burner (7) will be deactivated in case a threshold value of the temperature of the burner (7) or the thermal element (8) on that side connected to the burner (7) has been exceeded.

11. The method according to any one of claims 3 to 10, **characterized in that** the burner (7) will be deactivated in case a threshold value of the charge and/or the voltage of the energy storage (2) has been exceeded.

12. The method according to any one of claims 1 to 11, **characterized in that** data are exchanged between the control device (6) and an electronic circuit of the vehicle (5).

13. An apparatus (1) for charging an energy storage (2) via a current generating device (3), comprising at least one control device (6), a burner (7) connected to a tank (11) for fuel supply, a charging device (4) connected to the energy storage (2), and a thermal element (8) whose one side is connected to the current generating device (3), and a monitoring unit for the temperature of a heat dissipating element (9), **characterized in that** the second side of the thermal element (8) is connected to a heat dissipating element (9) of a vehicle (5), and that a monitoring unit (19) is provided for the temperature of the heat dissipating element (9) and connected to the control device (6) so that the current generating device (3) will be controllable to charge the energy storage (2) as a function of the temperature of the heat dissipating element (9).

14. The apparatus (1) according to claim 13, **characterized in that** at least one sensor (20) is provided for detecting the temperature of the heat dissipating element (9) and connected to the monitoring unit (19).

15. The apparatus (1) according to claim 13 or 14, **characterized in that** the at least one sensor (20) is integrated in a housing of the apparatus (1) which is attached to the heat dissipating element (9).

16. The apparatus (1) according to any one of claims 13 to 15, **characterized in that** at least one sensor (25) is provided for detecting the temperature of the burner (7) and connected to the monitoring unit (19).

17. The apparatus (1) according to any one of claims 13 to 16, **characterized in that** the heat dissipating element (9) is comprised of an engine block (12) or a frame part of the vehicle (5).

18. The apparatus (1) according to any one of claims 13 to 17, **characterized in that** a device (23) for detecting the charging condition of the energy storage (2), in particular for detecting the voltage of the energy storage (2), is provided and connected to the monitoring unit (19).

19. The apparatus (1) according to any one of claims 13 to 18, **characterized in that** the monitoring unit (19) is integrated in the control device (6).

20. The apparatus (1) according to any one of claims 13 to 19, **characterized in that** the control device (6) is connectable to an electronic circuit of the vehicle (5), in particular via a data bus (30).

## Revendications

1. Procédé pour charger un accumulateur d'énergie (2) par le biais d'un dispositif générateur de courant (3) et d'un chargeur (4), un brûleur (7) du dispositif générateur de courant (3) étant alimenté en carburant d'un réservoir (11) et le brûleur étant chauffé, lorsque le brûleur est activé, par la combustion du carburant qui est régulée par un dispositif de commande (6), et le courant étant produit par une différence de température, avec un thermocouple (8) qui est raccordé sur un côté au dispositif générateur de courant (3), courant avec lequel l'accumulateur d'énergie (2) est chargé, la température d'un élément de dissipation de chaleur (9) étant surveillée, **caractérisé en ce que** l'accumulateur d'énergie (2) est chargé pour le maintien de la capacité de l'accumulateur d'énergie (2) d'un véhicule (5) garé non utilisé, la température d'un élément de dissipation de chaleur (9) qui est raccordé au deuxième côté du thermocouple (8), sur lequel est monté le dispositif générateur de courant (3) étant surveillée et le brûleur (7) est régulé en fonction de la température mesurée de l'élément de dissipation de chaleur (9).

2. Procédé selon la revendication 1, **caractérisé en ce que** le brûleur (7) est activé lorsque la température mesurée de l'élément de dissipation de chaleur (9) passe sous une valeur seuil (18).

3. Procédé selon la revendication 1 ou 2, **caractérisé en ce que** l'état de charge de l'accumulateur d'énergie (2), en particulier la tension de l'accumulateur d'énergie (2), est surveillé.

4. Procédé selon la revendication 3, **caractérisé en ce qu'**un procédé de charge correspondant est choisi pour l'accumulateur d'énergie (2) en fonction de l'état de charge de l'accumulateur d'énergie (2).

5. Procédé selon la revendication 3 ou 4, **caractérisé en ce que**, en cas de passage de la charge de l'accumulateur d'énergie (2) ou de sa tension sous une valeur seuil, le brûleur (7) est activé et l'accumulateur d'énergie (2) est chargé.

6. Procédé selon l'une quelconque des revendications 1 à 5, **caractérisé en ce que**, lors de l'activation du brûleur (7), celui-ci est alimenté en carburant à partir du réservoir (11) du véhicule (5) équipé d'un moteur à combustion et est allumé, le carburant étant brûlé.

7. Procédé selon la revendication 6, **caractérisé en ce que**, pendant la combustion, le brûleur (7) est maintenu, essentiellement, à une température constante.

8. Procédé selon la revendication 7, **caractérisé en ce que** la température du brûleur (7) est adaptée au thermocouple (8).

9. Procédé selon l'une quelconque des revendications 1 à 8, **caractérisé en ce que** la température du brûleur (7) est surveillée.

10. Procédé selon la revendication 9, **caractérisé en ce que** le brûleur (7) est désactivé lorsqu'une valeur seuil de la température du brûleur (7) ou du thermocouple (8) sur le côté raccordé au brûleur (7) est dépassée.

11. Procédé selon l'une quelconque des revendications 3 à 10, **caractérisé en ce que** le brûleur (7) est désactivé lorsqu'une valeur seuil de la charge ou de la tension de l'accumulateur d'énergie (2) est dépassée.

12. Procédé selon l'une quelconque des revendications 1 à 11, **caractérisé en ce que** des données sont échangées entre le dispositif de commande (6) et un circuit électronique du véhicule (5).

13. Dispositif (1) pour charger un accumulateur d'énergie (2) par le biais d'un dispositif générateur de courant (3), daté d'au moins un dispositif de commande (6), un brûleur (7), qui est raccordé à un réservoir (11) pour l'alimentation en carburant, un chargeur (4) raccordé à l'accumulateur d'énergie (2), et un thermocouple (8) dont un côté est raccordé au dispositif générateur de courant (3), et un dispositif de surveillance de la température d'un élément de dissipation de chaleur (9), **caractérisé en ce que** le deuxième côté du thermocouple (8) est raccordé à un élément de dissipation de chaleur (9) d'un véhicule (5), et **en ce qu'** un dispositif de surveillance (19), raccordé au dispositif de commande (6), est prévu pour la température de l'élément de dissipation de chaleur (9), de sorte que le dispositif générateur de courant (3) destiné à charger l'accumulateur d'énergie (2) peut être régulé en fonction de la température de l'élément de dissipation de chaleur (9).

14. Dispositif (1) selon la revendication 13, **caractérisé en ce qu'**au moins un capteur (20) est prévu pour la détection de la température de l'élément de dissipation de chaleur (9) et **en ce que** ce capteur est raccordé au dispositif de surveillance (19).

15. Dispositif (1) selon la revendication 13 ou 14, **caractérisé en ce qu'**au moins un capteur (20) est intégré dans un boîtier du dispositif (1) qui est fixé à l'élément de dissipation de chaleur (9).

16. Dispositif (1) selon l'une quelconque des revendications 13 à 15, **caractérisé en ce qu'**au moins un capteur (25) est prévu pour la détection de la température du brûleur (7) et est raccordé au dispositif de surveillance (19).

17. Dispositif (1) selon l'une quelconque des revendications 13 à 16, **caractérisé en ce que** l'élément de dissipation de chaleur (9) est formé par un bloc moteur (12) ou par une partie de châssis du véhicule (5).

18. Dispositif (1) selon l'une quelconque des revendications 13 à 17, **caractérisé en ce qu'**un dispositif (23) est prévu pour la détection de l'état de charge de l'accumulateur d'énergie (2), en particulier pour la détection de la tension de l'accumulateur d'énergie (2), et est raccordé au dispositif de surveillance (19).

19. Dispositif (1) selon l'une quelconque des revendications 13 à 18, **caractérisé en ce que** le dispositif de surveillance (19) est intégré dans le dispositif de commande (6).

20. Dispositif (1) selon l'une quelconque des revendications 13 à 19, **caractérisé en ce que** le dispositif de commande (6) peut être raccordé à un circuit électronique du véhicule (5), en particulier par le biais d'un bus de données (30).
